# EUROPEAN PATENT SPECIFICATION

(11) **EP 2 524 183 B1**
(45) Date of publication and mention of the grant of the patent: **26.06.2019**
(21) Application number: 11733152.0
(22) Date of filing: 11.01.2011
(51) Int. Cl.: F26B 17/10, C10L 5/44, C10L 5/36

(54) **PNEUMATIC STEAM DRYER FOR PRODUCING FUEL PELLETS AND PROCESS THEREFORE**
PNEUMATISCHER DAMPFTROCKNER ZUR HERSTELLUNG VON BRENNSTOFFPELLETS UND VERFAHREN DAFÜR
SÉCHOIR PNEUMATIQUE À VAPEUR POUR LA FABRICATION DE GRANULES DE CARBURANT ET PROCESSUS CORRESPONDANT

(30) Priority: 29.04.2010 US 329420 P; 14.01.2010 SE 1050033
(43) Date of publication of application: 21.11.2012
(73) Proprietor: OUTOTEC (FINLAND) OY, 02230 Espoo (FI)
(72) Inventor: ATTERHEM, Lars, S-937 93 Burträsk (SE); NÄSLUND, Bengt.Olof, S-903 64 Umeå (SE)
(74) Representative: Zacco Sweden AB
(86) International application number: PCT/SE2011/050023
(87) International publication number: WO 2011/087437

(56) References cited:
- EP-A1- 0 058 651
- EP-A1- 1 843 114
- WO-A1-00/73703
- WO-A1-2008/107044
- WO-A1-2011/087419
- FR-A- 1 048 667
- JP-A- 2009 202 078
- JP-A- 2009 202 078
- US-A- 2 651 269
- US-A- 2 985 965
- US-A- 4 290 269
- US-A1- 2009 090 282
- BORDE, I. ET AL.: 'Pneumatic and Flash Drying In: Handbook of Industrial Drying' CRC PRESS, [Online] 2007, XP008161134 Retrieved from the Internet: <URL:http://www.crcnetbase.com/doi/pdf/10.1 201/9781420017> [retrieved on 2011-04-13]
- MÜNTER C ET AL: "EXERGY STEAM DRYING AND ITS ENERGY INTEGRATION", INTERNATIONAL NORDIC BIOENERGY CONFERENCE, 1 - 5 SEPTEMBER 2003,, 1 September 2003 (2003-09-01), pages 271-273, XP001562268,

## Description

### Field of the invention

The present invention relates to a pneumatic steam dryer for producing bio fuel pellets. The invention also relates to a process for producing bio fuel pellets in a pneumatic steam dryer.

### Background of the invention

Drying of bulk material of wooden or peat origin in a pneumatic dryer is previously known. Wet bulk material is fed into a drying conduit of a pneumatic dryer and dried by heated gas. The dried bulk material is separated from the gas by separating means and discharged from the pneumatic dryer. The drying process is very energy consuming and is therefore preferably carried in a pneumatic dryer comprising a closed system. The bulk material is typically used as fuel in different industrial, commercial or domestic applications. The dried bulk material is cooled down after the drying process and transported to a separate factory where the bulk material is further treated, for example pelletized. To prepare the dried bulk material for pelleting the material is first conditioned, heated, to about 80 °C in advance of the pelleting operation. This is very energy demanding. Moreover is the dried bulk material easily ignited and it is therefore necessary to handle such material carefully.

Prior art US4290269 describes a system and process for drying organic material in a pneumatic steam dryer operating above atmospheric pressure where the dried material is fed to a combustion chamber to produce heat for heating the dryer. Another prior art US2009/0090282 describes a waste energy conversion system wherein waste material like food is dried in a dryer, pelletized and combusted to produce heat for the dryer and electricity.

Other systems comprising pelleting devices are described in US2985965 A, XP001562268 and US2651269 A.

### Summary of the invention

It is an object of the present invention to provide an energy efficient and safe pneumatic steam dryer for producing fuel pellets.

This object and other objects are met by the invention as defined in the independent claims. Example embodiments of the invention are defined in the dependent claims. In addition the present invention has other advantages and features apparent from the description below.

An arrangement for producing bio fuel pellets according to a first aspect of the present invention is defined in claim 1.

The pneumatic steam dryer comprises further a pelleting device integrated in the circulation conduit system, wherein said pelleting device is connected to said bulk material outlet of the separating means, and the total mass flow of bulk material is conveyed from the separating means to the pelleting device.

A process for producing bio fuel pellets in a pneumatic steam dryer according to a second aspect of the present invention is defined in claim 8.

The present invention thus provides a pneumatic steam dryer as well as a process that enables pelletizing of dried bulk material into fuel pellets in a substantially oxygen free, inert safe environment.

A further advantage of integrating the pelleting device into the steam filled pressurized circulation conduit system is that the temperature of the dried bulk material is elevated after the drying process and is approximately above 140 °C at the bulk material outlet of the cyclone. This is beneficial since the lignin in bulk material originating from wooden material is softened. The softened lignin has a glueing effect on the particles and binds the particles together in the forming and pressing operation in the pelleting device. The pelleting operation is therefore easier and less energy consuming. Thus no other means for heat conditioning of the dried bulk material in advance of the pelleting device is necessary which improves the energy efficiency of the process for producing bio fuel pellets

These and other advantages are further described below and defined in the appended dependent claims.

The present invention relates in particular to a pneumatic steam dryer for producing bio fuel pellets of preferably biomass based bulk materials, more preferably wood and peat based bulk materials. These bulk materials usually have an initial moisture content of at least 40% moisture on a weight basis, typically above 50% moisture.

Biomass based bulk material has high energy content and is particularly suitable for production of bio fuel pellets. The bulk material is preferably dried to moisture content below 12 % by weight.

### Brief description of figures

Embodiments will now be described, by way of example, with reference to the accompanying figures in which
Figure 1 shows a flow scheme of a first embodiment of the pneumatic steam dryer 1.1 according to the present invention.
Figure 2 shows a flow scheme of a second embodiment of the pneumatic steam dryer 1.2 according to the present invention.
Figure 3 shows a flow scheme of a third embodiment of the pneumatic steam dryer 1.3 according to the present invention.
Figure 4 shows a flow scheme of a fourth embodiment of the pneumatic steam dryer 1.4 according to the present invention.

Detailed description of preferred embodiments.

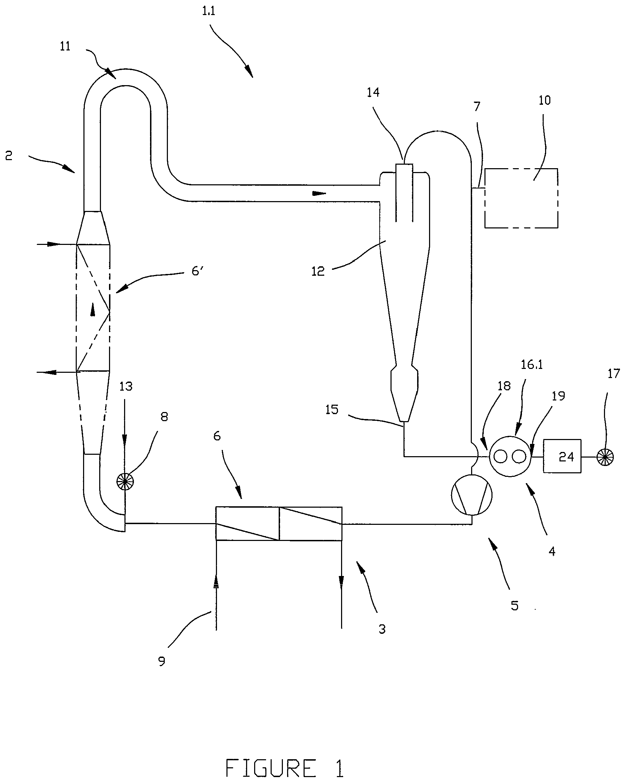

With reference to Fig. 1 a first embodiment of a pneumatic steam dryer 1.1 for producing bio fuel pellets according to the present invention is shown.

The pneumatic steam dryer 1 comprises a drying section 2, a heating section 3 connected to each other to form a circulation conduit system. The circulation conduit system further comprises a pelleting section 4 connected to the drying section 2 via separating means 12.

The pneumatic steam dryer 1.1 and the circulation conduit system are adapted to operate above atmospheric pressure. In operation of the pneumatic steam dryer is the circulation conduit system pressurized and filled with steam such as superheated or saturated steam, thereby forming a substantially oxygen free, inert, internal environment which prevents hazardous dust explosions. The oxygen content in the steam is preferably below 12%, more preferably 5-10%. The steam is used as drying medium for drying the bulk material as well as transport medium of the bulk material for transporting the material through the circulation conduit system. The circulation conduit system further comprises ducts for conducting bulk material and steam between the elements of the pneumatic steam dryer.

The heating section 3 comprises a fan 5, a heat exchanger 6 and a surplus steam outlet 7. The fan 5 is connected into the circulation conduit system for pneumatically conveying said bulk material suspended in said steam through the circulation conduit system from an inlet feeding device 8 into the separating means 9. The fan 5 comprises a blower or an ejector.

A heat exchanger 6 is connected into the circulation conduit system for heating said steam. The heat exchanger 6 is preferably connected between the fan 5 and the inlet feeding device 8 of the drying section 2, thus only steam is heated by the heat exchanger. This has the functional benefit that deposits of particles of bulk material on the heat conducting surfaces of the heat exchanger are avoided. The heat exchanger 6 superheats the steam in the drying section 3 to a temperature above 200 °C. The heat exchanger 6 is supplied with a primary heating medium 9 such as flue gas, pressurized steam, hot water, thermal oil or similar from an external heat source. In particular industrial processes using steam, for example a combined heat and power plant, a paper mill, a steam generation plant or similar are used for supplying heat to the pneumatic steam dryer 1.1.

Optionally, an additional heat exchanger 6' may be connected into the drying section 2 to heat the steam after the bulk material has been fed into the circulation conduit system.

Furthermore, the heating section 3 also comprises a surplus steam outlet 7 connected to the circulation conduit system for releasing surplus steam from the circulation conduit system. Operating conditions such as the pressure and/or temperature of the pneumatic steam dryer are thereby controlled and maintained. The surplus steam is fed to energy recovery means 10 such as a steam regenerator as part of an energy recovery process. In the energy recovery means 10 is the surplus steam cooled and depleted of energy, whereby clean steam and waste condensate is generated.

The drying section 2 comprises an inlet feeding device 8, a drying conduit 11 and separating means 12. The inlet feeding device 8 is connected to the circulation conduit for feeding wet bulk material 13 continuously or intermittently into a flow of steam inside said circulation conduit system.
The wet bulk material 13 fed to the pneumatic steam dryer 1.1 by the inlet feeding device comprises wood based particles. The particles are typically sized < 25 mm having a size distribution and particle density suitable for pneumatic transport.

The size distribution of the particles after drying is typically the same as before drying.

The inlet feeding device 8 comprises typically a cellular feeder or a plug screw feeder or a similar feeding device which is adapted to avoid pressure loss from the circulation conduit and only provides for a marginal steam leakage at the actual differential pressure between the outside pressure (typically atmospheric) of the pneumatic steam dryer and the pressure inside the circulation conduit.

A drying conduit 11 is connected into said circulation conduit system between the inlet feeding device and the separating means. The drying conduit 11 typically comprises an elongated conduit consisting of a series of vertical pipes which are connected together in the upper and lower ends by bent pipes. The bulk material is dried in the drying conduit by heat transfer from the superheated steam while being pneumatically transported in a fluidized state to the separating means. The residence time of the bulk material in the drying section is very short, approximately less than 2 minutes. Moisture and volatiles such as hydrocarbons and terpens in the wet bulk material evaporates and forms surplus steam. When moisture evaporates from the bulk material the steam temperature decreases. Consequently the moisture content of the bulk material is reduced.

Separating means 12 are connected to the drying conduit 11 to receive all bulk material and to separate the bulk material from the steam, the separating means 12 comprising a steam outlet 14 and a bulk material outlet 15.

The separating means 12 comprises at least one cyclone which separates the dried bulk material from said steam in one single step. The steam outlet 14 is connected to the heating section and the steam is returned to the heating section 3 for heating.

The pneumatic steam dryer 1.1 further comprises a pelleting section 4. The pelleting section is connected to the bulk material outlet 15 of the separating means 12.

The bulk material is typically fed to the pelleting section 4 by gravity. It may alternatively include transport by conveyors or similar, short term storage in a hopper or vessel and final feeding to a pelleting device 16.

The pelleting section comprises a pelleting device 16.

The rolling body or screw cooperates with the perforated matrix surface. The dried bulk material is fed into a compression zone where the material is formed into pellets. by pressing it or extruding by the rolling body or screw through the perforations of the matrix.

The pelleting device comprises for example a pellet press 16.1, such as a ring-and-roll pellet press or a flat bed die pellet press. Ring-and-roll pellet presses and flat bed die pellet presses are previously known. These pellet presses typically comprises a perforated matrix surface and a compressing body such as a rolling body in a compressing zone of the pellet press. The compressing body cooperates with the perforated matrix surface. The dried bulk material is fed into the compression zone where the bulk material is formed into pellets. The rolling body presses or extrudes the material through the perforations of the matrix surface.

The pelleting device may alternatively comprise an extrusion pellet press 16.2 such as a screw type extruder which is further described below.

The pellet press 16.1, in Fig. 1 illustrated by a ring-and-roll pellet press comprises a pelleting device inlet 18 and a pelleting device outlet 19. The pelleting device inlet 18 is connected to the bulk material outlet 15 of the separating means. The ring-and-roll pellet press 16.1 is integrated in the circulation conduit system. This means that at least the pelleting device inlet side 18 and the compression zone of the pellet press is subjected to overpressure. The total mass flow of dried bulk material is conveyed from the separating means 12 to the ring-and-roll pellet press 16.1 via the bulk material outlet 15. The bulk material is pelletized by the pelleting device into bio fuel pellets.

Bio fuel pellets are typically cylindrically shaped with a diameter of less than 15 mm and a length of less than 70 mm. Other dimensions are equally possible, however the bio fuel pellets are suitably dimensioned for being combusted in commercially available domestic pellet furnaces.

The ring-and-roll pellet press 16.1 is fully integrated into the steam filled pressurized circulation conduit system. Both the inlet side 18 and the outlet side 19 are subjected to overpressure. The ring-and-roll pellet press has to be designed for operation in a pressurized environment. The ring-and-roll pellet press 16.1 is followed by a pellet discharging device 17 which discharges the fuel pellets to the normal atmosphere.

The pellet discharging 17 device comprises a cellular feeder or similar which is pressure-tight and adapted to avoid pressure loss from the circulation conduit and only provides for a marginal steam leakage at the actual differential pressure between the outside pressure (typically atmospheric) of the pneumatic steam dryer and the pressure inside the circulation conduit system. The discharging operation by the cellular feeder is intermittent and it is necessary to assist the feeding flow from the pellet press 16.1 to the cellular feeder 17. Thus a storage container 24 is preferably connected between the pellet press 16.1 and the cellular feeder 17.

Optionally may the pelleting section also comprise a mill 21 connected between the bulk material outlet 15 and the ring-and-roll pellet press 16.1. The mill 21 and the advantages thereof are further described below.

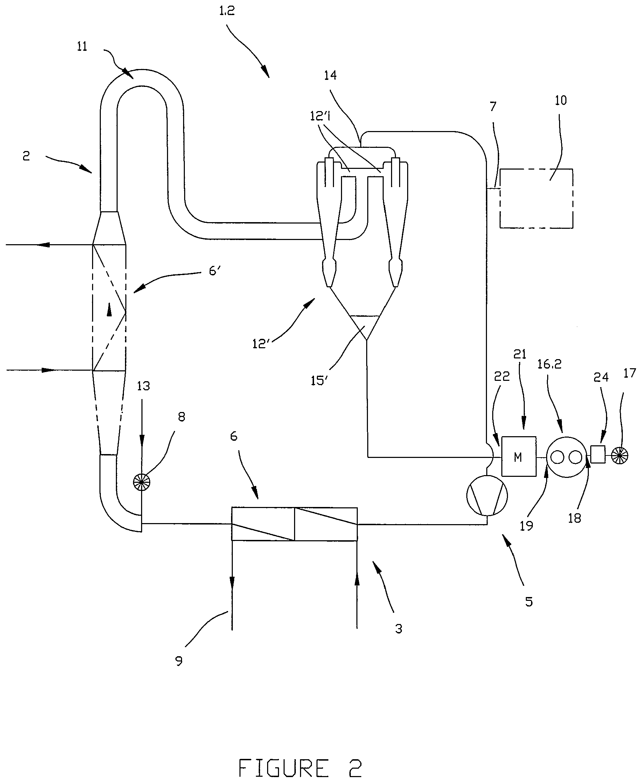

In Figure 2 is a flow scheme of a second embodiment of the pneumatic steam dryer 1.2 according to the present invention shown. Like references are used for like features.

The pneumatic steam dryer 1.2 differs from the first embodiment in that the separating means comprises at least two cyclones 12' connected in parallel into the circulation conduit to provide efficient separation in one single step. The two cyclones are fed in parallel with bulk material suspended in drying steam. Each cyclone comprises a separate cyclone inlet 12'i which is connected to the drying conduit. The cyclone inlets 12'i are equally dimensioned, thus approximately half of the total mass flow of dried bulk material suspended in steam is conducted through each cyclone inlet 12'i. By improving the separation efficiency the operation of the dryer is improved and the maintenance costs are decreased. The total mass flow of dried bulk material is conveyed from the separating means 12' to the ring-and-roll pellet press 16.1 via the bulk material outlet 15'. The bulk material is pelletized by the pelleting press into bio fuel pellets.

The pneumatic steam dryer 1.2 also comprises a mill 21. The mill is integrated in said circulation conduit system, and connected between the bulk material outlet and the pelleting device. The mill comprises a mill inlet 22 and a mill outlet 23. The mill inlet is connected to the bulk material outlet 15 and the mill outlet 23 is connected to the ring-and-roll pellet press 16.1. The object of the mill 21 is to comminute the bulk material to achieve an advantageous uniform particle size distribution in advance of pelletizing. The mill 21 comprises for example a vertical rotor mill, a refiner mill or a pin mill. The advantage of integrating the mill into the circulation conduit system is that the temperature of the bulk material is elevated when the bulk material is fed into the mill. Depending on the selected type of mill this is particularly advantageous because the milling operation improves and the specific power consumption of the mill decreases. The safe, inert environment is also beneficial for the milling operation.

Like in previous embodiment may an additional heat exchanger 6' optionally be connected into the drying section 2 to heat the steam after the bulk material has been fed into the circulation conduit system.

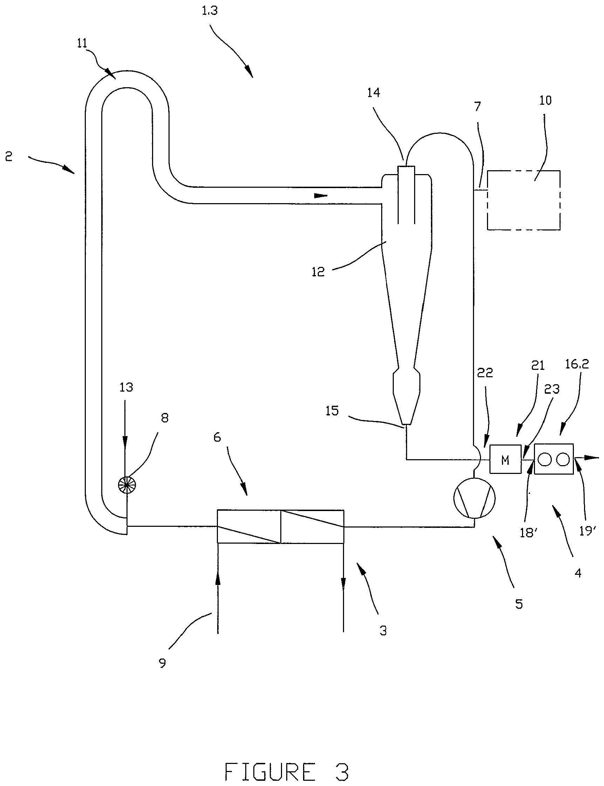

Figure 3 shows a flow scheme of a third embodiment of the pneumatic steam dryer 1.3 according to the present invention. Like references are used for like features.

The pneumatic steam dryer 1.3 differs from the previous embodiments in that the pelleting device comprises an extrusion pellet press 16.2 such as screw type extruder. Screw type extruders are previously known and typically comprises a housing and a compressing body such as a compressing screw and a perforated matrix surface. The housing, the compressing screw and the perforated matrix surface forms a compressing zone. The compressing screw cooperates with the housing to compress the dried material located in between the screw and the housing. The compressed bulk material is extruded through the perforated matrix surface. In operation of the screw type extruder the dried bulk material forms a plug in the compression zone. The bulk material plug functions as a pressure-seal. The screw type extruder therefore also operates to pressure-tighten the pneumatic steam dryer.

The extrusion pellet press 16.2 is integrated in the circulation conduit system. The extrusion press comprises an inlet side 18' and an outlet side 19'. The inlet side 18' is connected to the pressurized internal environment of the pneumatic steam dryer, and the outlet side 19' is subjected to atmospheric pressure. Thus a separate pellet discharging device is not necessary. The screw type extruder 16.2 both pelletizes the bulk material and discharges the fuel pellets to the normal atmosphere. The screw type extruder is connected to the bulk material outlet 15 and receives the dried bulk material. The extrusion pellet press has to be designed for operation in a pressurized environment. Optionally may the pelleting section also comprise a mill 21 connected between the bulk material outlet 15 and the ring-and-roll pellet press 16.1. The mill 21 and the advantages thereof are further described above. Like in previous embodiments may an additional heat exchanger 6' optionally be connected into the drying section 2 to heat the steam after the bulk material has been fed into the circulation conduit system.

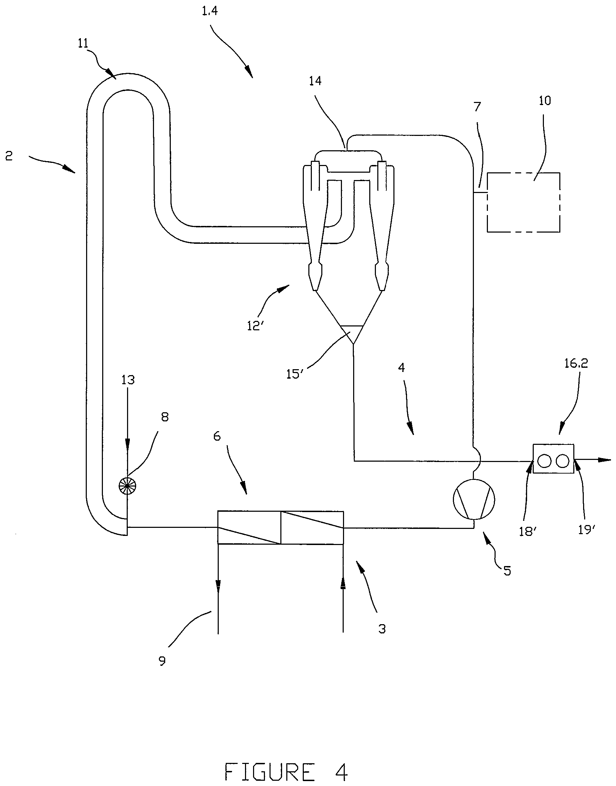

Figure 4 shows a flow scheme of a fourth embodiment of the pneumatic steam dryer 1.4 according to the present invention. Like references are used for like features.

The pneumatic steam dryer 1.4 differs from the third embodiment in that the separating means comprises at least two cyclones 12' connected in parallel, as previously described. Furthermore comprises the pelleting section 4 also a mill 21 connected in between the bulk material outlet 15' and the extrusion press 16.2. The effects and advantages of the mill are described above.
Like in previous embodiments may an additional heat exchanger 6' optionally be connected into the drying section 2 to heat the steam after the bulk material has been fed into the circulation conduit system.

The pneumatic steam dryer according to the invention is operated above atmospheric pressure. This means that the overpressure range is typically from 1 to 40 Bar, preferably from 2 to15 Bar, more preferably from 2 to 10 Bar. According to the invention, the overpressure range is from 2 to 5 Bar. The overpressure range from 2.5-4.5 Bar has proven to be particularly suitable for the drying process and the evaporation capacity of the drying steam. The possibilities to utilize the vast heat source by recovering the latent heat in the surplus steam increases with the temperature i.e. with the steam pressure inside the pneumatic steam dryer.

## Claims

1. Arrangement for producing fuel pellets, comprising a pneumatic steam dryer (1.1;1.2;1.3;1.4) for drying bulk material based on wood and/or peat, wherein said pneumatic steam dryer is adapted to operate above atmospheric pressure, in an overpressure range of 2-5 bar, wherein the pneumatic steam dryer (1.1; 1.2; 1.3; 1.4) comprises
- a circulation conduit system which in operation of the pneumatic steam dryer (1.1;1.2;1.3;1.4) is pressurized and filled with steam,
- a heat exchanger (6,6') connected into said circulation conduit system for heating said steam,
- an inlet feeding device (8) connected to said circulation conduit system for feeding bulk material into said circulation conduit system,
- a drying conduit (11) connected into said circulation conduit system wherein said bulk material is dried by heat transfer from said steam thereby forming surplus steam,
- separating means (12;12') connected to said drying conduit (11) for separating said bulk material from said steam, said separating means (11) comprising a steam outlet (14) and a bulk material outlet (15;15'),
- a fan (5) connected into said circulation conduit system for pneumatically conveying said bulk material suspended in said steam from said inlet feeding device (8) to said separating means (12;12'),
**characterized in that** a pelleting device (16.1;16.2) is integrated in the circulation conduit system, wherein said pelleting device (16.1;16.2) is connected in series to said bulk material outlet (15;15') of the separating means (12;12'), such that, when in operation, the total mass flow of bulk material is conveyed from the separating means (12;12') to the pelleting device (16.1;16.2) and the inner environment inside the pelleting device is pressurized and filled with steam.

2. Arrangement for producing fuel pellets according to claim 1 wherein the pelleting device comprises a pellet press (16.1; 16.2).

3. Arrangement for producing fuel pellets according to claim 1 or 2 wherein the pelleting device comprises an extrusion pellet press (16.2).

4. Arrangement for producing fuel pellets according to any of claims 1-3 wherein the pellet press comprises a ring-and-roll pellet press (16.1).

5. Arrangement for producing fuel pellets according to any of claims 1-3 wherein the pellet press comprises a screw type extruder (16.2).

6. Arrangement for producing fuel pellets according to any of the claims 1-5 comprising a mill (21) connected into the circulation conduit system.

7. Arrangement for producing fuel pellets according to any of the claims 1-6 wherein the mill (21) is connected between the bulk material outlet (15;15') and the pelleting device (16.1; 16.2).

8. Process for producing fuel pellets with an arrangement for producing fuel pellets according to one or more of the claims 1-7 comprising
- feeding bulk material by an inlet feeding (8) device into a steam filled circulation conduit system of the pneumatic steam dryer operating above atmospheric pressure, in an overpressure range of 2-5 bar,
- heating said steam by heating means (6;6'),
- drying said bulk material in a drying conduit (11) by heat transfer from said steam thereby forming surplus steam,
- pneumatically conveying said bulk material suspended in said steam through said drying conduit (11) from said inlet feeding device (8) into said separating means (12;12'),
- separating said bulk material from said steam by a separating means,
said process **characterized in that** the process further comprises conveying the total mass flow of bulk material from the separating means (12; 12') to a pelleting device (16.1; 16.2), wherein the inner environment inside the pelleting device is pressurized and filled with steam, and pelletizing said bulk material into pellets by the pelleting device (16.1; 16.2).

9. A process according to claim 8 wherein said pelletizing is carried out by extrusion.

10. A process according to claim 8 or 9 comprising comminuting said bulk material by a mill (21) in advance of said pelletizing.

## Patentansprüche

1. Anordnung zur Herstellung von Brennstoffpellets, umfassend einen pneumatischen Dampftrockner (1.1,1.2,1.3,1.4) zum Trocknen von Schüttgut auf Basis von Holz und/oder Torf, wobei der pneumatische Dampftrockner dafür eingerichtet ist, oberhalb des atmosphärischen Drucks, in einem Überdruckbereich von 2-5 bar, zu arbeiten, wobei der pneumatische Dampftrockner (1.1; 1.2; 1.3; 1.4) Folgendes umfasst
- ein Kreislaufleitungssystem, das in Betrieb des pneumatischen Dampftrockners (1.1,1.2,1.3,1.4) mit Druck beaufschlagt und mit Dampf gefüllt wird,
- einen Wärmetauscher (6,6'), der in das Kreislaufleitungssystem zum Heizen des Dampfes angeschlossen wird,
- eine Eingangszufuhrvorrichtung (8), die zum Zuführen von Schüttgut in das Kreislaufleitungssystem mit dem Kreislaufleitungssystem verbunden ist,
- eine Trocknungsleitung (11), die in das Kreislaufleitungssystem angeschlossen ist, wobei das Schüttgut durch Wärmeübertragung vom Dampf getrocknet wird, wodurch überschüssigen Dampf gebildet wird,
- Trennmittel (12;12'), die zum Trennen des Schüttguts vom Dampf mit der Trocknungsleitung (11) verbunden sind, wobei die Trennmittel (11) einen Dampfausgang (14) und einen Schüttgutausgang (15;15') umfassen,
- ein Gebläse (5), das zum pneumatischen Fördern des im Dampf suspendierten Schüttguts von der Eingangszufuhrvorrichtung (8) zu den Trennmitteln (12;12') in das Kreislaufleitungssystem angeschlossen ist,
**dadurch gekennzeichnet, dass**
eine Pelletiervorrichtung (16.1;16.2) im Kreislaufleitungssystem integriert ist, wobei die Pelletiervorrichtung (16.1,16.2) mit dem Schüttgutausgang (15;15') der Trennmittel (12;12') in Reihe geschaltet ist, so dass, in Betrieb, der gesamte Massenfluss von Schüttgut von den Trennmitteln (12;12') zur Pelletiervorrichtung (16.1,16.2) gefördert wird,
und die innere Umgebung innerhalb der Pelletiervorrichtung mit Druck beaufschlagt und mit Dampf gefüllt wird.

2. Anordnung zur Herstellung von Brennstoffpellets nach Anspruch 1, wobei die Pelletiervorrichtung eine Pelletpresse (16.1; 16.2) umfasst.

3. Anordnung zur Herstellung von Brennstoffpellets nach Anspruch 1 oder 2, wobei die Pelletiervorrichtung eine Extrusionspelletpresse (16.2) umfasst.

4. Anordnung zur Herstellung von Brennstoffpellets nach einem der Ansprüche 1-3, wobei die Pelletpresse eine Ring-und-Rolle-Pelletpresse (16.1) umfasst.

5. Anordnung zur Herstellung von Brennstoffpellets nach einem der Ansprüche 1-3, wobei die Pelletpresse eine Art eines Schneckenextruders (16.2) umfasst.

6. Anordnung zur Herstellung von Brennstoffpellets nach einem der Ansprüche 1-5, umfassend eine Mühle (21), die in das Kreislaufleitungssystem angeschlossen ist.

7. Anordnung zur Herstellung von Brennstoffpellets nach einem der Ansprüche 1-6, wobei die Mühle (21) zwischen dem Schüttgutausgang (15;15') und der Pelletiervorrichtung (16.1; 16.2) angeschlossen ist.

8. Verfahren zur Herstellung von Brennstoffpellets mit einer Anordnung zur Herstellung von Brennstoffpellets nach einem oder mehreren der Ansprüche 1-7, umfassend
- Zuführen von Schüttgut durch eine Eingangszufuhrvorrichtung (8) in ein dampfgefülltes Kreislaufleitungssystem des pneumatischen Dampftrockners, der oberhalb des atmosphärischen Drucks, in einem Überdruckbereich von 2-5 bar, in Betrieb ist,
- Heizen des Dampfs durch Heizmittel (6;6'),
- Trocknen des Schüttguts in einer Trocknungsleitung (11) durch Wärmeübertragung vom Dampf, wodurch überschüssigen Dampf gebildet wird,
- pneumatisches Fördern des im Dampf suspendierten Schüttguts durch die Trocknungsleitung (11) von der Eingangszufuhrvorrichtung (8) in die Trennmittel (12;12'),
- Trennen des Schüttguts vom Dampf durch ein Trennmittel,
wobei das Verfahren **dadurch gekennzeichnet ist, dass** das Verfahren weiter Folgendes umfasst
Fördern des gesamten Massenflusses von Schüttgut von den Trennmitteln (12;12') zu einer Pelletiervorrichtung (16.1; 16.2), wobei die innere Umgebung innerhalb der Pelletiervorrichtung mit Druck beaufschlagt und mit Dampf gefüllt wird, und Pelletieren des Schüttguts in Pellets durch die Pelletiervorrichtung (16.1; 16.2).

9. Verfahren nach Anspruch 8, wobei das Pelletieren durch Extrusion ausgeführt wird.

10. Verfahren nach Anspruch 8 oder 9, umfassend Zerkleinern des Schüttguts durch eine Mühle (21) vor dem Pelletieren.

## Revendications

1. Dispositif pour la fabrication de granules de carburant, comprenant un séchoir pneumatique à la vapeur (1.1;1,2;1,3;1.4) pour faire sécher un matériau en vrac sur la base de bois et / ou de tourbe, ledit séchoir pneumatique à la vapeur étant adapté pour fonctionner à une pression supérieure à la pression atmosphérique, dans un intervalle de surpression de 2-5 bar, dans lequel le séchoir pneumatique à la vapeur (1.1; 1.2; 1.3; 1.4) comprend
- un système de conduit de circulation qui, lors du fonctionnement du sécheur pneumatique à vapeur (1.1,1.2,1.3,1.4), est pressurisé et rempli de vapeur,
- un échangeur de chaleur (6,6') relié audit système de conduit de circulation pour chauffer ladite vapeur,
- un dispositif d'alimentation d'entrée (8) relié audit système de conduit de circulation pour alimenter du matériau en vrac dans ledit système de conduit de circulation,
- un conduit de séchage (11) relié audit système de conduit de circulation dans lequel ledit matériau en vrac est séché par transfert de chaleur à partir de ladite vapeur, formant ainsi un excès de vapeur,
- des moyens de séparation (12;12') reliés audit conduit de séchage (11) pour séparer ledit matériau en vrac de ladite vapeur, lesdits moyens de séparation (11) comprenant une sortie de vapeur (14) et une sortie de matériau en vrac (15;15'),
- un ventilateur (5) relié audit système de conduit de circulation pour acheminer pneumatiquement ledit matériau en vrac en suspension dans ladite vapeur à partir dudit dispositif d'alimentation d'entrée (8) vers lesdits moyens de séparation (12;12'),
**caractérisé en ce**
**qu'**un dispositif de granulation (16.1,16.2) est intégré dans le système de conduit de circulation, ledit dispositif de granulation (16.1,16.2) étant relié en série à ladite sortie de matériau en vrac (15;15') des moyens de séparation (12;12'), si bien que lors du fonctionnement, le débit massique total du matériau en vrac est acheminé à partir des moyens de séparation (12;12') au dispositif de granulation (16.1;16.2)
et l'environnement intérieur au sein du dispositif de granulation est pressurisé et rempli de vapeur.

2. Dispositif pour la fabrication de granules de carburant selon la revendication 1, dans lequel le dispositif de granulation comprend une presse à pellets (16.1; 16.2).

3. Dispositif pour la fabrication de granules de carburant selon la revendication 1 ou 2, dans lequel le dispositif de granulation comprend une presse extrudeuse à pellets (16.2).

4. Dispositif pour la fabrication de granules de carburant selon l'une quelconque des revendications 1 à 3, dans lequel la presse à pellets comprend une presse à pellets à rouleaux et à anneaux (16.1).

5. Dispositif pour la fabrication de granules de carburant selon l'une quelconque des revendications 1 à 3, dans lequel la presse à pellets comprend une extrudeuse du type à vis (16.2).

6. Dispositif pour la fabrication de granules de carburant selon l'une quelconque des revendications 1 à 5, comprenant un broyeur (21) relié au système de conduit de circulation.

7. Dispositif pour la fabrication de granules de carburant selon l'une quelconque des revendications 1 à 6, dans lequel le broyeur (21) est relié entre la sortie de matériau en vrac (15; 15') et le dispositif de granulation (16.1; 16.2).

8. Procédé pour la fabrication de granules de carburant au moyen d'un dispositif pour la fabrication de granules de carburant selon l'une quelconque des revendications 1 à 7, comprenant
- l'alimentation d'un matériau en vrac par un dispositif d'alimentation d'entrée (8) dans un système de conduit de circulation rempli de vapeur d'un séchoir pneumatique à vapeur fonctionnant à une pression supérieure à la pression atmosphérique, dans un intervalle de surpression de 2-5 bar,
- le chauffage de ladite vapeur par des moyens de chauffage (6;6'),
- le séchage dudit matériau en vrac dans un conduit de séchage (11) par transfert de chaleur à partir de ladite vapeur, formant ainsi un excès de vapeur,
- l'acheminement pneumatique dudit matériau en vrac en suspension dans ladite vapeur par ledit conduit de séchage (11) à partir dudit dispositif d'alimentation d'entrée (8) dans lesdits moyens de séparation (12;12'),
- la séparation dudit matériau en vrac de ladite vapeur par un moyen de séparation,
ledit procédé étant **caractérisé en ce que** le procédé en outre comprend l'acheminement du débit massique total du matériau en vrac provenant des moyens de séparation (12; 12') à un dispositif de granulation (16.1; 16.2), dans lequel l'environnement intérieur au sein du dispositif de granulation est pressurisé et rempli de vapeur, et la granulation dudit matériau en vrac en granulés à l'aide du dispositif de granulation (16.1; 16.2).

9. Procédé selon la revendication 8, dans lequel ladite granulation est réalisée par extrusion.

10. Procédé selon la revendication 8 ou 9, comprenant le broyage dudit matériau en vrac par un broyeur (21) avant ladite granulation.
